Europäisches Patentamt

(19) European Patent Office

Office européen des brevets

(11) Publication number: **0 055 909**
**A1**

(12) **EUROPEAN PATENT APPLICATION**

(21) Application number: **81305959.9**

(22) Date of filing: **18.12.81**

(51) Int. Cl.³: **F 16 K 17/16**

---

(30) Priority: **31.12.80 GB 8041572**

(43) Date of publication of application:
**14.07.82 Bulletin 82/28**

(84) Designated Contracting States:
**DE FR GB IT**

(71) Applicant: **ELECTROFABRICATION & ENGINEERING COMPANY LIMITED**
**Gloucester Road West Chirton Industrial Estate**
**North Shields Tyne & Wear, NE29 8RQ(GB)**

(72) Inventor: **Falconer, John David**
**1 Heathfield Place Melton Park**
**Gosforth Newcastle upon Tyne(GB)**

(74) Representative: **Sanderson, Michael John et al,**
**MEWBURN ELLIS & CO 2/3 Cursitor Street**
**London EC4A 1BQ(GB)**

---

(54) Safety pressure relief devices for pressure vessels.

(57) A safety pressure relief device for location on a pressure vessel includes an assembly (2) including a reverse bursting disc having an annular flange member (16) surrounding an inner disc member (18) consisting of an annular flange portion (22) and a central concave-convex dome portion (20), the external diameter of the disc member (18) being substantially equal to the internal diameter of the flange member (16). The flange member (16) and flange portion (22) are located between annular inlet and outlet support members (26,28), an axial clamping pressure being applied to the assembly (2) by a holder member (4,6) and there being a joint (24,40) of predetermined strength effected between said two members (16,18) such that, when a predetermined critical pressure applied to the disc causes reversal of the dome portion (20), the joint between the flange member (16) and part at least of the flange portion (22) is broken and said part at least of the flange portion (22) is withdrawn from between the support members (26,28).

FIG.4

Croydon Printing Company Ltd.

# SAFETY PRESSURE RELIEF DEVICES FOR PRESSURE VESSELS

## TECHNICAL FIELD

This invention relates to safety pressure relief devices for use on pressure vessels, and more particularly to such devices incorporating reverse bursting discs.

## BACKGROUND ART

Reverse bursting discs commonly comprise a central concave-convex dome portion surrounded by an annular or substantially annular flange portion, the latter portion, in use of the disc, being clamped between a pair of support members with the convex side of the dome portion being subjected to fluid pressure within the vessel. When the pressure of said fluid reaches a predetermined maximum value, the dome portion is reversed from its normal rest position to a displaced position such that fluid under pressure is allowed to escape through an aperture previously closed by the disc.

In one known arrangement, knife blades to the concave side of the dome portion when in its rest position are used to rupture the dome portion on reversal. However, such blades require regular inspection and servicing to ensure that their integrity and sharpness is such as to result in correct functioning of the disc. Additionally, the presence of such blades in the escape path for the fluid under pressure imparts a restriction on the flow of said fluid, while, particularly in high pressure applications using relatively thick discs which require heavy knife blades to effect rupture, the expense of such knife blades can be substantial.

In an alternative known arrangement, the flange portion of the disc is clamped by axial pressure between inlet and outlet support members in such a manner that, on reversal of the disc portion, the flange portion of the disc moves radially inwardly and is released from the support members to permit escape of fluid from the over-pressurised vessel.

With such an arrangement, it is essential to ensure that the flange portion to be released on reversal is torqued to a precise predetermined load, otherwise failure of the disc will not occur at the desired predetermined critical pressure.

DISCLOSURE OF THE INVENTION

According to the present invention there is provided a safety pressure relief device for location on a pressure vessel, the device comprising a reverse bursting disc assembly including a reverse bursting disc having an outer annular flange member and a disc member consisting of a central concave-convex dome portion surrounded by an annular flange portion the external diameter of which is substantially equal to the internal diameter of the flange member, and annular inlet and outlet support members between which the flange member and flange portion of the disc member are located, the device further comprising a holder member so shaped that, on location of the assembly in said holder member and on the application of axial pressure to the assembly by means of said holder member, the flange member of the disc is clamped between the inlet and outlet support members but at least the radially inner regions of the flange portion of the disc member are substantially relieved of said clamping pressure, and the path between the flange member and the disc member is sealed, a joint of predetermined strength existing between the flange member and the disc member whereby, on reversal of the dome portion of the disc member, at least part of the flange portion of the disc member is withdrawn from between the support members while the flange member remains in position between said support members.

In one embodiment of the invention, the holder member exerts axial pressure on the annular flange member and on the radially outer regions only of the flange portion of the disc member.

In a preferred device, the annular flange member and the disc member are attached one to the other to provide a circular joint of controlled strength

- 4 -

therebetween.

Conveniently the joint forms a fluid-tight seal between the inlet and outlet faces of the disc, although such a seal may be achieved by means of, for example, a flexible membrane covering the inlet face of the device.

In one embodiment of the invention, an annular fused joint is formed between the flange member and the disc member by electron beam welding. Preferably the strength of the joint decreases from the outlet side of the disc towards the inlet side of the disc, while the joint may extend over part only of the thickness of the disc and may be substantially triangular in transverse section, tapering from the outlet side of the disc towards the inlet side of the disc. Alternatively, however, the joint may be achieved by, for example, other forms of welding or by brazing or by soldering.

In a further embodiment of the invention, the joint is formed by an annular lamina abutting the inlet face of the disc and preferably secured, for example by an adhesive, to said inlet face of the disc, to extend over, and seal, the junction between the flange member and the disc member. The lamina may be of metal foil such as nickel, tantalum, silver or lead, or may be of a plastics material such as PTFE or FEP.

In all embodiments of the invention, the strength of the joint between the flange member and the disc member is such as not to be able to withstand the critical pressure of the disc if applied directly thereto, and is also preferably such as to break, if the device is installed upside down on a pressure vessel, at a pressure of the order of 1.5 times the critical pressure of the disc.

Preferably the disc and the inlet and outlet support members are secured together to comprise a unitary construction, for example by means of a plurality of spot welds through the inlet and outlet support members and the flange member of the disc.

In a preferred device, hinge means are provided on the disc to prevent complete release of the disc member from between the support members on reversal of the dome portion. Conveniently said hinge means are provided by securing a part of the flange portion of the disc member to one or both of the support members, for example by spot-welding, such that, on reversal, the remainder of the flange portion is withdrawn from between the support members, the disc member hinging about said part of the flange portion.

In devices incorporating an electron beam fused joint between the disc member and the flange member, said securing of the part of the flange portion of the

- 6 -

disc member to one or both of the support members may be supplemented or substituted by an increase in the strength of the part of the fused joint between said part of the flange portion and the flange member.

The device preferably includes, in the region of the hinge means, abutment means projecting radially inwardly of the radially outer regions of the part of the dome portion adjoining said part of the flange portion for engagement by, to control the movement of, said dome portion on reversal thereof.

The holder member conveniently comprises inlet and outlet holder portions each provided with a planar clamping surface engaging with the inlet and outlet support members respectively to exert a clamping pressure on the flange member and on the flange portion of the disc member, the radially inner boundary of each planar parallel clamping surface of the holder member being axially aligned with an intermediate region of the flange portion of the disc member, preferably closely adjacent the joint with the flange member, whereby the bulk of the clamping pressure is exerted on the flange member.

Preferably the outlet holder portion includes a surface the radially outer extent of which comprises said planar clamping surface and the radially inner extent, which is co-planar with said radially outer extent, of which comprises a supporting shoulder for the radially inner regions of the flange portion of the disc member during normal working conditions.

Preferably the abutment means are formed on or secured to the outlet holder portion of the holder member, and a tag portion extends radially outwardly of the disc at the region of the hinge means. In such a case the holder member has formed therein, adjacent the abutment means, a receiving portion for said tag portion of the disc such that, on location of the device in the holder member, the hinge means are radially aligned with the abutment means.

BRIEF DESCRIPTION OF THE DRAWINGS

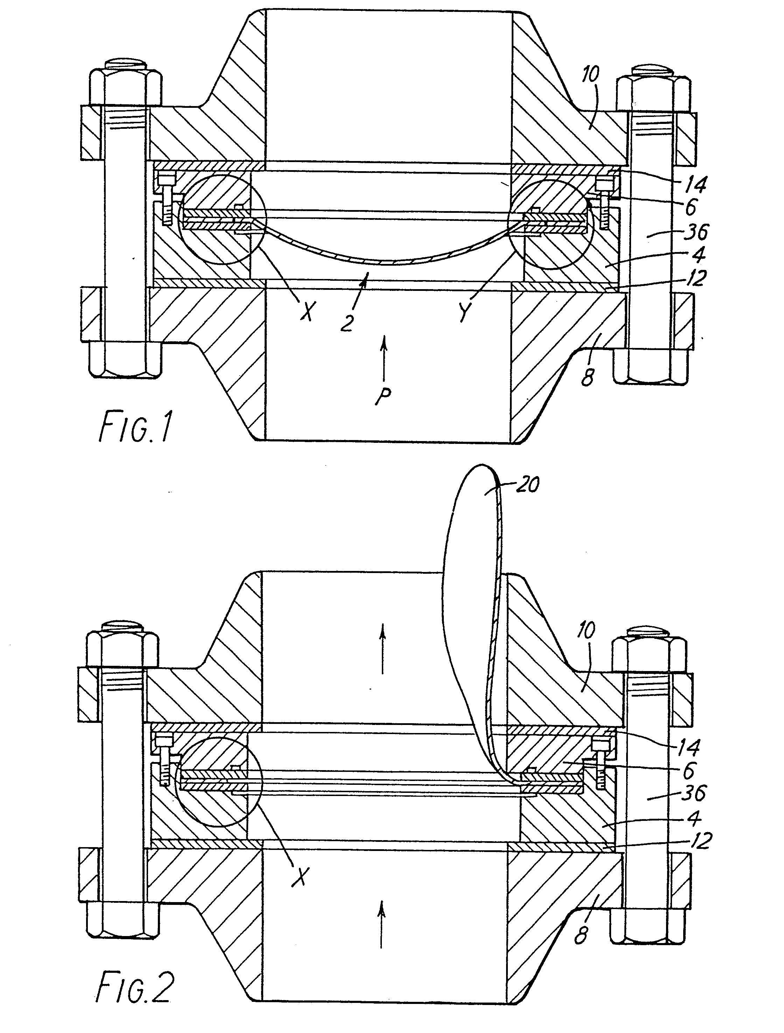

Figs. 1 and 2 are vertical sections through a safety device according to the invention clamped between inlet and outlet pipe flanges, with the disc in its operative position and its displaced position respectively;

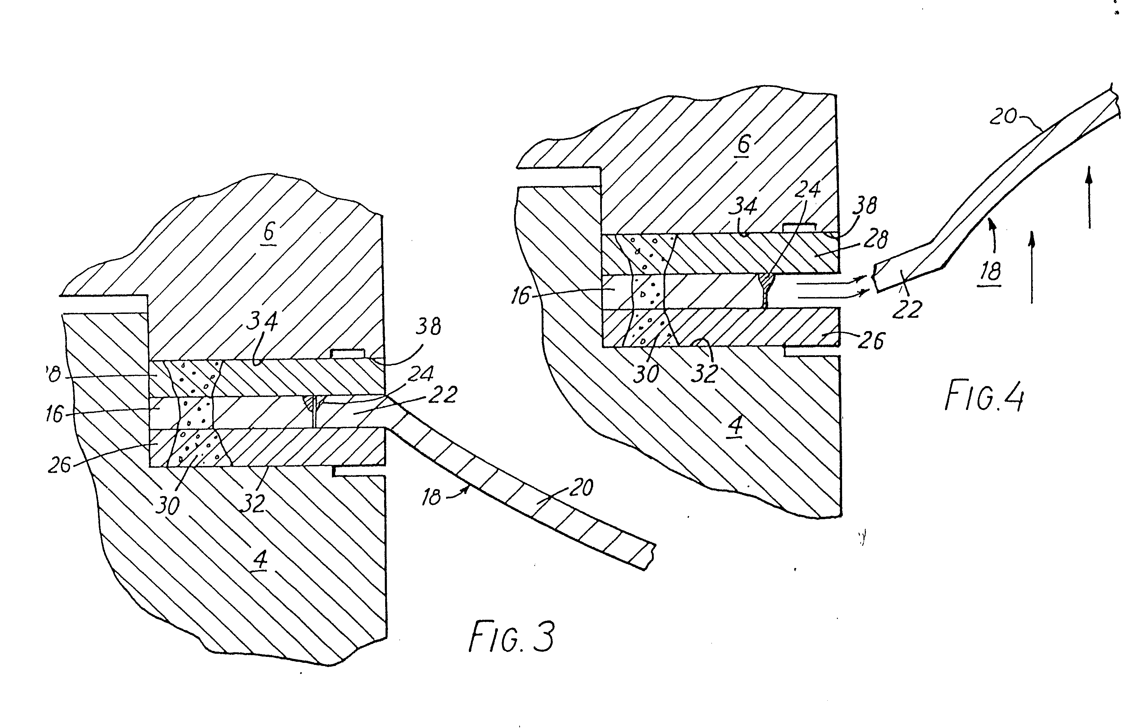

Figs. 3 and 4 show detail of the area X of Figs.1 and 2 respectively for a disc incorporating an electron beam welded joint;

Figs. 5 and 6 show detail of the area X of Figs.1 and 2 respectively for a disc incorporating a lamina joint;

Fig. 7 is a plan view from above of the safety device of Figs. 1 and 2;

- 8 -

Fig. 8 shows a detail of the area Y of Fig. 1 for a disc with an electron beam welded joint, and

Fig. 9 shows a detail equivalent to the area Y of Fig. 1 for a disc with a lamina joint.

BEST MODES OF CARRYING OUT THE INVENTION

Referring to the drawings, there is shown a safety pressure relief device including a reverse bursting disc assembly indicated generally at 2 clamped between inlet and outlet portions 4,6 of a holder member, said member itself being located between inlet and outlet pipe flanges 8,10 with sealing gaskets 12,14 positioned between the pipe flanges and the holder member.

The assembly 2 comprises a reverse bursting disc consisting of an outer annular flange member 16 and a disc member 18 including a central concave-convex dome portion 20 and an annular flange portion 22. The flange member 16 and disc member 18 are conveniently formed out of a single flat piece of, for example, stainless steel, the dome portion 20 being formed into said sheet and the sheet subsequently being subjected to a circular cutting tool whereby the disc portion 18 is cut out from sheet. With such an arrangement, it will be appreciated that the disc member 18 and the flange member 16 are a perfect mating fit one within the other.

The two members 16,18 are then joined together by means of a circular fused joint 24 formed by electron beam welding, the techniques employed being substantially as detailed in our UK patent specification no. 1552131.

The circular joint 24 is formed to the outlet side of the disc and the strength is controlled for reasons to be explained below.

The flange member 16 and the flange portion 22 of the disc member 18 are sandwiched between annular inlet and outlet support rings 26,28 and the components are spot-welded together as at 30 to form an easily handleable unitary construction.

The holder portions 4,6 are provided with planar parallel clamping surfaces 32,34 respectively between which the assembly 2 is located, the inner boundary of the clamping surfaces 32,34 being located at a point slightly radially inwardly of the joint 24 whereby, on tightening the flange bolts 36 to clamp the device in position, a clamping load is applied to the flange member 16 and to the outer regions only of the flange portion 22 of the disc member 18.

The outlet holder portion 6 includes an annular shoulder 38 the inner diameter of which is identical to that of the inlet holder portion 4, the surface of said shoulder being co-planar with the clamping surface 34 to provide support for the assembly 2 under normal working conditions.

When the pressure P applied to the convex side of the dome portion 20 of the disc reaches the critical pressure of the disc, the dome portion 20 reverses. The strength of the joint 24 is such that the energy available on reversal is sufficient to break the joint whereby the flange portion 22 is withdrawn from between the support rings 26,28 to open the bore previously closed by the disc and permit venting of an over-pressurised vessel.

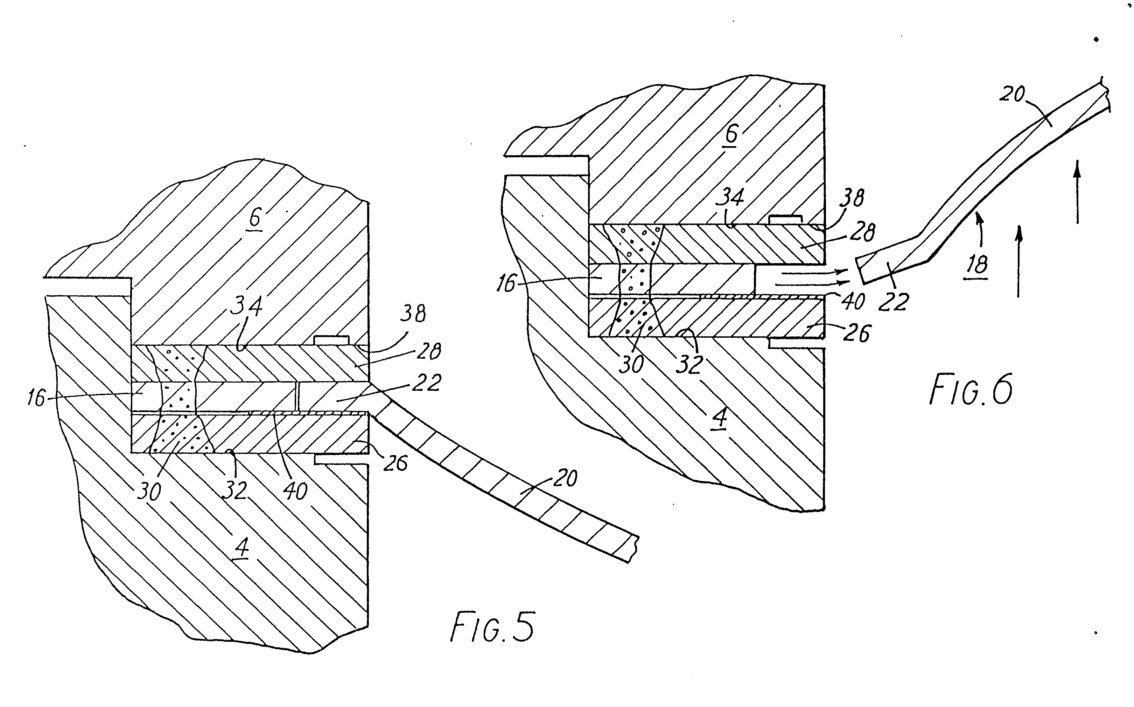

An alternative means of joining the members 16,18 together comprises an annular lamina 40 of, for example, metal foil or plastics material secured, for example by an adhesive, to the inlet surfaces of the flange member 16 and the flange portion 22 to extend over and seal the junction between said components. The material of the lamina 40 is resistant to the applied conditions, the strength of the joint or the tear strength of the material of the lamina again being such as to result in release of the flange portion 22 from between the support rings 28,30 on reversal of the dome portion 20 (see Fig. 6).

In both the described embodiments, the joint is of controlled strength, which strength is below the critical pressure of the disc, and which, if the device is inadvertently installed upside down in the holder member, will break at a maximum of 1.5 times the critical pressure of the disc.

In order to prevent complete removal of the disc member 18 from the device on reversal, a specially strengthened hinge portion is provided over part of the flange portion 22 whereby said part of the flange portion is retained between the support rings 26,28 on reversal.

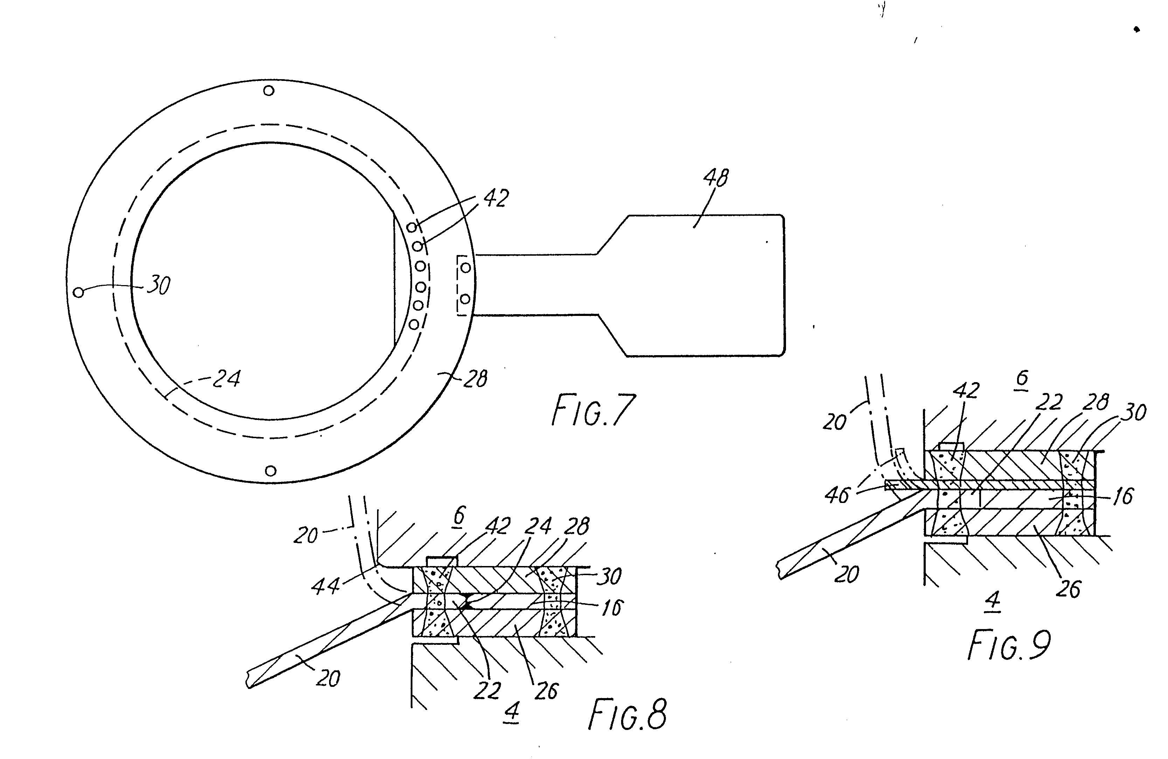

More particularly, a plurality of spot welds 42 are provided at frequent intervals (see Fig. 7) over part of the device to secure part of the flange portion 22 to the support rings 26,28. It will thus be appreciated that, on reversal, said part of the flange portion 22 remains between the rings 26,28 to provide a hinge about which the dome portion 20 and remainder of the flange portion 22 pivot.

To provide a controlled bend of the disc in the region of the hinge, an abutment is provided to the outlet side of the disc portion 18 adjacent said hinge. Said abutment may comprise a shoulder 44 integrally formed on or secured to the outlet holder portion 6 as clearly seen in Fig. 8 or may comprise a deformable ring member 46 (Fig. 9) either separate from or secured to the disc - a combination of the shoulder 44 with the ring member 46 may be used.

In the embodiment incorporating the electron beam welded joint 24, the strengthening of the hinge portion by spot welding may be supplemented or substituted by strengthening of the fused weld over the appropriate part of the disc, for example by welding along both the inlet and outlet faces of the joint over this part of the disc.

A metal identification tag 48 can be spot welded to the disc to extend radially outwardly therefrom in the region of the hinge.

In order to ensure that, on location of the assembly 2 within the holder member, the hinge on the disc is always aligned with the abutment 44 on the holder member, the inlet portion 4 of the holder member is formed with a radial slot through which the tag 48 extends and the outlet portion 6 of the holder member is provided with a dependent pin adapted to be received within said slot to locate the inlet and outlet holder portions 4,6 relative to one another. Thus, when the tag portion 48 of the disc is received within said slot and when the inlet and outlet holder portions are accurately located relative to one another, the hinge of said disc is radially aligned with the abutment 44 on the outlet holder portion 6.

Thus there is provided a safety pressure relief device incorporating a reverse bursting disc of robust construction, that will operate to a working pressure up to 90% of the critical reversal pressure with an accuracy of $\pm 2\%$. On reversal, the flange portion 22 of the disc is pulled from the support rings 26,28, hinged and held at a predetermined point - means may be provided in the outlet bore to locate the dome portion 20 in a predetermined displaced position, while said outlet bore is selected to compensate for the presence of the hinge and the restriction to flow during venting imposed by the presence of the dome portion. On venting of the accumulated pressure, there are no flying parts and a minimum restriction to flow. Additionally the device will operate on liquid systems where sufficient flow is available and will relieve at 1.5 times the critical pressure if installed upside down. The clamping torque applied to the device, providing it is sufficient to locate the assembly within the holder member and effect a seal between the pressurised inlet side of the device and the outlet side thereof, is not, because of the nature of the clamping action, critical to operation of the device.

## CLAIMS

1. A safety pressure relief device for location on a pressure vessel, the device comprising a reverse bursting disc assembly (2) including a reverse bursting disc having a disc member (18) consisting of a central concave-convex dome portion (20) surrounded by an annular flange portion (22), and a holder member (4,6) for said assembly (2), characterised in that the disc further includes an outer annular flange member (16) the internal diameter of which is substantially equal to the external diameter of said flange portion (22) of the disc member (18), the flange member (16) and flange portion (22) of the disc member (18) being located between annular inlet and outlet support members (26,28), and the holder member (4,6) being so shaped that, on location of the assembly (2) in said holder member (4,6) and on the application of axial pressure to the assembly by means of said holder member (4,6) the flange member (16) of the disc is clamped between the inlet and outlet support members (26,28) but at least the radially inner regions of the flange portion (22) of the disc member are substantially relieved of said clamping pressure, and the path between the flange member (16) and the disc member (18) is sealed, a joint of predetermined strength existing between the flange member (16) and the disc member (18) whereby, on reversal of the dome portion (20) of the disc member (18), at least part of the flange portion (22) of the disc member (18) is withdrawn from between the support members (26,28) while the flange member (16) remains in position between said support members (26,28).

2. A device as claimed in claim 1 in which the holder member (4,6) exerts axial pressure on the annular flange member (16) and on the radially outer regions only of the flange portion (22) of the disc member (18).

3. A device as claimed in claim 1 or claim 2 in which the annular flange member (16) and the disc member (18) are attached one to the other to provide a circular joint (24,40) of controlled strength therebetween.

4. A device as claimed in claim 3 in which the joint (24,40) is such as to provide a fluid-tight seal between the inlet and outlet faces of the disc.

5. A device as claimed in claim 3 or claim 4 in which an annular fused joint (24) is formed between the flange member (16) and the disc member (18) by electron beam welding.

6. A device as claimed in claim 5 in which the strength of said joint (24) decreases from the outlet side of the disc towards the inlet side of the disc.

7.  A device as claimed in claim 6 in which the joint (24) extends over part only of the thickness of the disc and is substantially triangular in transverse section, tapering from the outlet side of the disc towards the inlet side of the disc.

8.  A device as claimed in claim 3 in which the joint is formed by an annular lamina (40) abutting the inlet face of the disc to extend over, and seal, the junction between the flange member (16) and the disc member (18).

9.  A device as claimed in claim 8 in which the annular lamina is adhered to the inlet face of the disc.

10. A device as claimed in any one of claims 1 to 9 in which the disc and the inlet and outlet support members (26,28) are secured together to comprise a unitary construction.

11. A device as claimed in any one of claims 1 to 10 in which hinge means (42) are provided on the disc to prevent complete release of the disc member (18) from between the support member (26,28) on reversal of the dome portion (20).

12. A device as claimed in claim 11 in which the hinge means (42) are provided by securing a part of the flange portion (22) of the disc member (18) to one or both of the support members (26,28) such that, on reversal, the remainder of the flange portion (22)

is withdrawn from between the support members (26,28),
the disc member (18) hinging about said part of the
flange portion (22).

13. A device as claimed in claim 12 together
with any one of claims 5 to 7 in which said securing
of the part of the flange portion (22) of the disc
member (18) to one or both of the support members
(26,28) is supplemented or substituted by an increase
in the strength of the part of the fused joint (24)
between said part of the flange portion (22) and
the flange member (16).

14. A device as claimed in claim 12 or claim 13
and including, in the region of the hinge means (42),
abutment means (44) projecting radially inwardly of
the radially outer part of the dome portion (20)
adjoining said part of the flange portion (22)
for engagement by, to control the movement of, said
dome portion (20) on reversal thereof.

15. A device as claimed in any one of claims
1 to 14 in which the holder member comprises inlet
and outlet holder portions (4,6) each provided with a
planar clamping surface (32,34) engaging with the
inlet and outlet support members (26,28) respectively
to exert a clamping pressure on the flange member (16)
and on the flange portion (22) of the disc member (18),
the radially inner boundary of the clamping surfaces

- 18 -

(32,34) of said holder portions (4,6) being axially aligned with a region of the flange portion (22) of the disc member (18) closely adjacent the joint with the flange member (16), whereby the bulk of the clamping pressure is exerted on the flange member (16).

16. A device as claimed in claim 15 in which the outlet holder portion (6) includes a surface the radially outer extent of which comprises said planar clamping surface (34) and the radially inner extent of which, which is co-planar with said radially outer· extent, comprises a supporting shoulder (38) for the radially inner regions of the flange portion (22) of the disc member (18) during normal working conditions.

17. A device as claimed in claim 15 or claim 16 together with claim 14 in which the abutment means (44) are formed on the outlet holder portion (6) of the holder member, a tag portion (48) extending radially outwardly of the disc at the region of the hinge means (42), the holder member (4,6) having formed thereon or secured thereto, adjacent the abutment means (44), a receiving portion for said tag portion (48) of the disc such that, on location of the assembly (2) in the holder member (4,6), the hinge means (42) are radially aligned with the abutment means (44).

FIG.1

FIG.2

FIG. 3

FIG. 4

FIG.5

FIG.6

FIG.7

FIG.8

FIG.9

0055909

## European Patent Office

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | FR - A - 786 192 (FARBEN INDUSTRIE) <br><br> * the entire document * | 1,3,4, 5,8,9 | F 16 K 17/16 |
| A | FR - A - 2 298 046 (ELECTROFABRI- CATION) <br><br> * page 3, line 4 - page 7, line 35 * | 1,2,10 | |
| A | FR - A - 2 188 086 (MARSTON) <br><br> * page 2, line 33 - page 4, line 32 * | 1,2,10 | TECHNICAL FIELDS SEARCHED (Int.Cl. 3) <br><br> F 16 K 17/00 |
| A | FR - A - 2 260 047 (MARSTON) <br><br> * page 3, line 11 - page 5, line 31 * | 1,2,10 11,12 | |
| D,A | GB - A - 1 552 131 (ELECTROFABRI- CATION) | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | | |
|---|---|---|---|
| The present search report has been drawn up for all claims | | | |
| Place of search | Date of completion of the search | Examiner | |
| The Hague | 12-03-1982 | VERELST | |

EPO Form 1503.1 06.78